# EUROPÄISCHE PATENTSCHRIFT

(11) **EP 1 713 735 B1**
(45) Veröffentlichungstag und Bekanntmachung des Hinweises auf die Patenterteilung: **21.07.2010**
(21) Anmeldenummer: 05745725.1
(22) Anmeldetag: 03.05.2005
(51) Int. Cl.: C03C 17/04, C03C 8/14, C03C 10/00, H05B 3/74, F24C 15/10

(54) **THERMISCH HOCHBELASTBARER GLASKERAMIK- ODER GLASKÖRPER, DEKORIERT MIT EINER FARBE AUF DER BASIS EINER SILIKATISCHEN SCHMELZE, DIE MIT EFFEKTPIGMENTEN VERSEHEN IST**
GLASS CERAMIC OR GLASS BODY THAT CAN BE SUBJECTED TO GREAT THERMAL LOADS AND IS DECORATED WITH A COLOR BASED ON A MELTED SILICATE CONTAINING EFFECT PIGMENTS
CORPS EN VITROCERAMIQUE OU EN VERRE A HAUTE CHARGE THERMIQUE ADMISSIBLE DECORE AVEC UNE PEINTURE A BASE DE MATIERE FONDUE AU SILICATE QUI PRESENTE DES PIGMENTS A EFFET

(30) Priorität: 06.05.2004 DE 102004022257
(43) Veröffentlichungstag der Anmeldung: 25.10.2006
(73) Patentinhaber: Schott AG, 55122 Mainz (DE)
(72) Erfinder: COTLEAR DE WITZMANN, Monica, 55268 Nieder-Olm (DE); WENNEMANN, Dietmar, 55234 Albig (DE); MILANOVSKA, Angelina, 55120 Mainz (DE); RUHL, Ella, 55120 Mainz (DE); LAUTERBACH, Eva, 55444 Seibersbach (DE); KOSMAS, Ioannis, 55271 Stadecken-Elsheim (DE)
(74) Vertreter: Fuchs
(86) Internationale Anmeldenummer: PCT/EP2005/004775
(87) Internationale Veröffentlichungsnummer: WO 2005/108321

(56) Entgegenhaltungen:
- WO-A-2004/046254
- DE-A1- 10 134 374
- US-A- 4 353 991
- US-A- 5 009 711
- US-A- 5 022 923
- US-A- 5 032 429
- US-A- 5 783 506
- US-B1- 6 517 628

## Beschreibung

Die Erfindung bezieht sich auf einen thermisch hochbelastbaren Glaskeramik- oder Glaskörper, dekoriert mit einer Farbe auf der Basis einer silikatischen Schmelze, die mit Effektpigmenten versehen ist.

Derartige Farben auf der Basis einer silikatischen Schmelze sind typischerweise keramische Farben mit einem Glasfluß als Basis. Diese Farben werden bei sehr hohen Temperaturen auf dem Trägerkörper gebrannt.

Indem man dieser Farbbasis Effektpigmente beimischt, werden dem mit dieser Farbe dekorierten Glaskeramik- bzw. Glaskörper neben der Farbe zusätzliche Eigenschaften (Effekte) verliehen. Typische Effektpigmente sind die Glanzpigmente, insbesondere die Metalleffektpigmente, die einen metallähnlichen Glanz erzeugen.

Glaskeramik- oder Glaskörper, die mit vorgenannten Farben, die Glanzpigmente enthalten, dekoriert sind, sind insbesondere als Glaskeramikplatten oder Platten aus vorgespanntem Spezialglas mit einem niedrigen thermischen Ausdehnungskoeffizienten, wie Borosilicatglas, die typischerweise als Kochflächen in Kochfeldern eingesetzt werden, d.h. thermisch hochbelastbar sind, ausgebildet. Aber auch beispielsweise Kaminsichtscheiben, Sichtfenster von Backöfen oder Lampenabdeckungen aus diesen Materialien, die ebenfalls thermisch stark belastet sind, werden im steigenden Maße mit vorgenannten Farben dekoriert.

Da insbesondere Kochflächen von Kochfeldern in modernen Küchen wegen ihrer Großflächigkeit auffällig sind und das stark kundenabhängige Design maßgebend beeinflussen, das auch von Land zu Land verschieden ist, werden in zahlreichen Schriften die unterschiedlichsten Dekorierungen beschrieben. Sie reichen von einfachen Mustern, z.B. als Firmenlogo und Kochzonenmarkierungen bis hin zu komplexen Vollflächen-Dekoren. Neben dem Design kommt es dabei auch insbesondere auf Kratzschutz gegen oberflächige Kratzer und Verminderung der Auffälligkeit gegenüber Verschmutzungen, z.B. Fingerabdrücken und Metallabrieb sowie von Gebrauchsspuren an. Derartige Dekore und ihre Aufbringung auf eine Glaskeramikplatte werden beispielsweise in der DE 44 26 234 C1 (= EP 0 693 464 B1) und der DE 34 33 880 C2 beschrieben. DE 101 34 374 A1 beschreibt eine Glaskeramikplatte mit vorherrschender Keatit-Mischkristallphase, die kochflächenseitig mit einer andersfarbigen vollflächigen Dekorbeschichtung versehen ist, die mindestens 80 Flächen-% abdeckt. Die Verminderung der Auffälligkeit von Kratzern wird durch die Regelung von Farbparametem, die Auswahl bestimmter Pigmente und ggfls. durch Verwendung eines Rasters aus unterschiedlichen Dekorfarben erreicht. Weitere dekorierte Kochflächen zeigen die DE 197 28 881 C1 (= DE 297 11 916 U1), die DE 100 14 373 C2 und die DE 200 19 210 U1. Die beiden letzteren Schriften beschreiben auch Dekore mit Sol-Gel-basierten Farben, die Metalleffekt-, Perlglanz-oder Interferenz-Pigmente, d.h. Effektpigmente enthalten, die einen Metallikeffekt in der Farbe bewirken. Aber auch mit derartigen Pigmenten versehene glasflussbasierte, d.h. keramische Metallikfarben sind Stand der Technik.

Effektpigmente, die in organischen Bindemitteln verwendet werden, sind aus US 6,517,628 B1 und WO 2004/046254 A1 bekannt.

US 6,517,628 A1 beschreibt die Verwendung von Farbeffektpigmenten in nicht-temperaturbelasteten Anwendungen wie Lacken, Druckfarben, Pulverbeschichtungen, kosmetischen Formulierungen usw. Die nachveröffentlichte WO 2004/046254 A1 beschreibt ebenfalls Glanzpigmente in organischen Bindern für bei der US 6,517,628 A1 beschriebene Zwecke. Als Glanzpigmente kommen hier oxidbeschichtete Aluminiumplättchen zur Anwendung.

Ein solches Perlglanzpigment auf der Basis beschichteter Glimmerplättchen ist beispielsweise unter der Marke IRIODIN® (Fa. Merck) auf dem Markt.

In bestimmten Marktsegmenten, speziell zur Anpassung an Aluminium- und Edelstahlfächen in modernen Küchen, haben derartig dekorierte Glas-/Glaskeramik-Kochflächen mit einem Metallikeffekt einen hohen Stellenwert.

Bisherige in der Praxis verwendete keramische Farben für die Dekoration von Glas- bzw. Glaskeramik-Kochflächen, Kaminsichtscheiben und anderen thermisch hochbelasteten Flachglasprodukten sind Systeme, welche ein oder mehrere Glasflüsse gemischt mit Farbpigmente(n) und ggf. Füllstoffe beinhalten. Nach dem Einbrand ergibt die Farbe eine mehr oder weniger homogene Beschichtung einer bestimmten Farbgebung. Im Falle der unter der Marke IRIODIN® bekannt gewordenen Pigmente und bei anderen Effektpigmenten wird diese Farbgebung zusätzlich durch die unterschiedliche Lichtreflexion auf den beschichteten Glimmerplättchen intensiviert, was zu den bekannten "Metallikeffekten" keramischer Farben führt.

Nachteil der vorgenannten Farben ist es, daß die Auffälligkeit von Gebrauchsspuren, Kratzern, Metallabrieb von Kochtöpfen, etc. auf den Kochflächen etc. mehr oder weniger stark ausgeprägt ist, weil die intakten Farben der Dekorierung ein homogenes Bild für das menschliche Auge bieten. Jede Unterbrechung der Homogenität wird somit sofort registriert und als störend empfunden.

Der Erfindung liegt daher die Aufgabe zugrunde, thermisch hochbelastbare Glaskeramik- oder Glaskörper mit einer solchen Farbe auf der Basis einer silikatischen Schmelze, die mit speziellen Effektpigmenten versehen ist, zu dekorieren, die eine verminderte Auffälligkeit von Gebrauchsspuren, Kratzern, Metallabrieb gegenüber den bekannten, dekorierten Glaskeramik- bzw. Glaskörpern bewirkt.

Die Lösung dieser Aufgabe gelingt gemäß der Erfindung dadurch, daß die silikatische Schmelze im vorgegebenen Anteil Spezial-Effektpigmente enthält, die auf dem dekorierten Glaskeramik- oder Glaskörper einen Farb-Flop-Effekt zeigen, und die durch Effektpigmente in Form von synthetisch hergestellten, planparallelen Siliziumdioxid (SiO₂)-Plättchen, die mit Metalloxiden belegt sind, gebildet sind.

Durch die Verwendung bestimmter Effektpigmente, insbesondere von speziellen Interferenz- oder Perglanzpigmenten, können Farben mit einem sogenannten Farb-Flop-Effekt, auch changierender oder Flip-Flop-Effekt genannt, hergestellt werden. Farben mit solchen Pigmenten ändern den Farbton mit dem Betrachtungswinkel. Die Hauptfarbe kommt nur bei einem bestimmten Winkel, dem Glanzwinkel, kräftig zur Geltung. Welche Farbtöne man aus anderen Betrachtungswinkeln sieht, hängt von einer Reihe von Faktoren, insbesondere von der Farbe des Träger-Untergrundes ab.

Durch die Verwendung solcher Farben gelingt es, die Auffälligkeit der Gebrauchsspuren, Kratzer etc. auf dem Weg zu verringern, daß man einen raffinierten Farbtonwechsel je nach Betrachtungswinkel einstellt ("Farb-Flop") und damit das menschliche Gehirn die Gebrauchsspuren nicht mehr wahrnimmt.

Für die Dekoration von Glaskeramik und Spezialgläsern, speziell für die Anwendungen Kochfläche, Kaminsichtscheiben etc. werden daher im speziellen geeignete Glasflüsse mit Farb-Flop-Spezialpigmenten gemischt. Daraus ergibt sich ein Multicolor-Effekt, der z.B. von Grün zu Grau, von Grün zu Violett oder von Gold zu Altrosa wechselt, alleine durch Änderung des Betrachtungwinkels.

Diese Effektpigmente, die einen Farb-Flop-Effekt bewirken, sind zwar an sich bekannt, es lag jedoch nicht nahe, sie in Farben mit einer silikatischen Schmelze als Basis zu verwenden, weil sie nicht branchenüblich sind und ihre Temperaturbeständigkeit gemäß Herstellerangaben nicht ausreichend für den Einsatz in derartigen Farben mit einer silikatischen Schmelze als Basis ist (stabil bis 230° C gemäß Technical Data Sheet des Herstellers vom Feburar 2003 bzw. Juni 2002). Gemäß Produktinformationen vom Hersteller Merck finden sie daher stets in organischen Matrixen Verwendung, wie z.B. im Automobilbau, in Kunststoffen, in Druckfarben und Lacken.
Es war daher nicht ohne weiteres ersichtlich, daß diese Effektpigmente zum Dekorieren von thermisch hochbelastbaren Glaskeramik- oder Glaskörpern verwendbar wären. Überraschenderweise stellte sich heraus, daß durch das Einschließen der vorgenanten Pigmente in eine silikatische Schmelze, insbesondere einen Glasfluss, wie sie üblicherweise in der Dekoration von Glaskeramiken und Spezialgläsern verwendet werden, die Temperaturstabilität derart erhöht werden kann, daß sie ein völlig neues Anwendungsgebiet erhalten.

Die Farb-Flop-Farbe besteht aus einer silikatischen Schmelze als Basis, der Effektpigmente in Form von synthetisch hergestellten planparallelen Siliziumdioxid (SiO ₂)-Plättchen, die mit Metalloxiden belegt sind, in einem vorgegebenen Anteil zugesetzt sind.

Derartige Effektpigmente zeigen einen ausgeprägten Farb-Flop-Effekt.

Vorzugsweise werden dabei die entsprechenden Effektpigmente der Firma Merck, die unter der Marke Colorstream® im Handel sind, verwendet. Die hierbei verwendeten sehr dünnen und ebenen, optimal planparallelen Pigmentteilchen ermöglichen außergewöhnlich changierende Interferenzeffekte, d.h. einen Multicolor-Effekt. Selbst bei gedämpften Lichtverhältnissen kommt der Farbwechsel der Pigmente sehr gut zur Geltung. Die besondere Ästhetik ist dabei auf den weichen, fließenden Übergang der Farben zurückzuführen.

Durch unterschiedliche Beschichtungen der planparallelen SiO₂- Colorstream®-Pigmentblättchen sind Farb-Flop-Pigmente in verschiedenen Farbtönen darstellbar, wie beispielsweise:
1. **Colorstream® Autumn Mystery**
   Die Farbe wechselt hierbei von Rot über ausdrucksstarkes Gold und Bronze bis Grün.
2. **Colorstream® Viola Fantasy**
   Die Farbe wechselt hierbei von einem kräftigen Lila über Silber und Grün bis Blau.
3. **Colorstream® Arctic Fire**
   Die Farbe wechselt hierbei von Türkis über brillantes Silber bis zu metallischem Rot und Gold.

Vorzugsweise ist die Basis der keramischen Farbe mit den erfindungsgemäßen Farb-Flop-Pigmenten ein Glasfluss.

Vorzugsweise besitzt der Glasfluß eine Glaszusammensetzung (in Gew.-%) von:

| | |
|---|---|
| Li₂O | 0 - 5 |
| Na₂O | 0 - 5 |
| K₂O | < 2 |
| ΣLi₂O + Na₂O + K₂O | 1 - 10 |
| MgO | 0 - 3 |
| CaO | 0 - 4 |
| SrO | 0 - 4 |
| BaO | 0 - 4 |
| ZnO | 0 - 4 |
| B₂O₃ | 15 - 27 |
| Al₂O₃ | 10 - 20 |
| SiO₂ | 43 - 58 |
| TiO₂ | 0 - 3 |
| ZrO₂ | 0 - 4 |
| Sb₂O₃ | 0 - 2 |
| F | 0 - 3 |

Diese Glaszusammensetzung des Glasflusses - im folgenden "GF1" genannt - entspricht derjenigen nach der DE 197 21 737 C1.
Andere, je nach Anwendung einsetzbare Glaszusammensetzungen von Glasflüssen werden in DE 198 34 801 C2, FR 2 732 960, EP 1 119 524 B1, DE 42 01 286 A1 und EP 0 460 863 B1 beschrieben.

Neben den erfindungsgemäß dem Glasfluss zugesetzten speziellen Farb-Flop-Pigmenten können optional auch übliche Füllstoffe und/oder andere konventionelle Farbpigmente, beispielsweise Farbkörper (Spinelle) zugesetzt werden. So kommen insbesondere die Colorstream®-Effektpigmente in Kombination mit anderen Farbpigmenten, in sogenannte Stylings, erst richtig zur Geltung.

Die Dekoration erfolgt vorzugsweise durch Siebdruck, insbesondere im Fall von Glas-/Glaskeramik-Kochflächen. Dabei waren besondere Schwierigkeiten in der Fertigungstechnik zu überwinden. Insbesondere bereitete die Anpastung/das Einstellen der richtigen Viskosität sowie die Korngröße der Pigmente für die Siebdruckanwendung besondere Probleme. Der Stand der Technik konnte hierzu keine Hinweise liefern, da die in Frage kommenden Farb-Flop-Pigmente, gelöst in organischen Lösungsmitteln, typischerweise bei ihrem Auftrag gesprüht werden, wie es insbesondere bei Autolacken der Fall ist.

Die Dicke der erfindungsgemäßen Dekorierung liegt typischerweise im Bereich von 1,0 - 6 µm.

### Ausführungsbeispiele:

1. Glasfluss "GF1" (nach DE 197 21 737 C) + 20 % Effektpigmente Colorstream® T10 - 02 Arctic Fire multi color effect pigment, angepastet mit konventionellem Siebdruckmedium, bedruckt auf Gläsern/Glaskeramiken, die unter nachstehenden Markenprodukten bekannt geworden sind:
   a) CERAN HIGHTRANS ® Kochflächen
   b) CERAN SUPREMA ® Kochflächen
   c) ROBAX ® Kaminsichtscheiben
   d) CERAN ARCTIC FIRE ® Kochflächen
   e) CERADUR ® Kochflächen ergibt jeweils einen Farb-Flop von Grün auf Violett mit verschiedenen Farbintensitäten, je nach Hintergrundfarbe des Trägers.
2. Glasfluss "GF1" + 20 % Effektpigmente Colorstream® F 10-00 Autumn Mystery multi color effect pigment + 3 % Schwarzpigmente M 91884 (Heraeus), angepastet mit Siebdruckmedium, bedruckt auf den gleichen Substraten wie im ersten Beispiel.
   Das ergibt jeweils einen Farb-Flop von Messing auf Altrosa mit verschiedenen Farbintensitäten, je nach Hintergrundfarbe des Trägers.

Bei beiden Ausführungsbeispielen ist in den Substrat-Fällen a) und b) die Farbintensität am höchsten. Im Fall c) tritt der Farb-Flop-Effekt mit verminderter Farbintensität auf einer transparenten Mattierung auf bzw. in den Fällen d) und e) auf der Hintergrundfarbe "seidenweiß".

## Patentansprüche

1. Thermisch hochbelastbarer Glaskeramik- oder Glaskörper, ausgebildet als Kochfläche in Kochfeldern, Kaminsichtscheibe, Sichtfenster von Backöfen oder Lampenabdeckungen, dekoriert mit einer Farbe auf der Basis einer silikatischen Schmelze, die mit Effektpigmenten versehen ist, **dadurch gekennzeichnet, dass** die silikatische Schmelze der Dekorfarbe im vorgegebenen Anteil Spezial-Effektpigmente enthält, die auf dem dekorierten Glaskeramik- oder Glaskörper einen Farb-Flop-Effekt zeigen, und die durch Effektpigmente in Form von synthetisch hergestellten, planparallelen Siliziumdioxid (SiO₂)-Plättchen, die mit Metalloxiden belegt sind, gebildet sind.

2. Glaskeramik- oder Glaskörper nach Anspruch 1, **dadurch gekennzeichnet, dass** die silikatische Schmelze durch einen Glasfluß gebildet ist.

3. Glaskeramik- oder Glaskörper nach Anspruch 2, **dadurch gekennzeichnet, dass** der Glasfluß eine Glaszusammensetzung (in Gewicht-%) von
| | |
|---|---|
| Li₂0 | 0 - 5 |
| Na₂O | 0 - 5 |
| K₂O | < 2 |
| ΣLi₂O + Na₂O + K₂O | 1 - 10 |
| MgO | 0 - 3 |
| CaO | 0 - 4 |
| SrO | 0 - 4 |
| BaO | 0 - 4 |
| ZnO | 0 - 4 |
| B₂O₃ | 15 - 27 |
| Al₂O₃ | 10 - 20 |
| SiO₂ | 43 - 58 |
| TiO₂ | 0 - 3 |
| ZrO₂ | 0 - 4 |
| Sb₂O₃ | 0 - 2 |
| F | 0 - 3 |
aufweist.

4. Glaskeramik- oder Glaskörper nach einem der Ansprüche 1 bis 3, **dadurch gekennzeichnet, dass** der silikatischen Schmelze neben den Spezial-Effektpigmenten übliche Füllstoffe und/ oder andere konventionelle Farbpigmente zugesetzt sind.

5. Glaskeramik- oder Glaskörper nach einem der Ansprüche 1 bis 4, **dadurch gekennzeichnet, dass** die Dekorierung mittels Siebdruck gebildet ist.

6. Glaskeramik- oder Glaskörper nach einem der Ansprüche 1 bis 5, **dadurch gekennzeichnet, dass** der Pigmentanteil der Spezial-Effektpigmente im Bereich von 1 bis 30 Gew.-% liegt.

## Claims

1. Glass-ceramic or glass body which can withstand high thermal loads, is in the form of a cooking plate in cooking hobs, a chimney viewing window, a viewing window of baking ovens or lamp covers, and is decorated with a colour based on a silicate melt provided with effect pigments, **characterized in that** the silicate melt of the decorative colour contains special effect pigments in the predefined proportion, and these special effect pigments display a colour flop effect on the decorated glass-ceramic or glass body and are formed by effect pigments in the form of synthetically produced, plane-parallel silicon dioxide (SiO₂) platelets coated with metal oxides.

2. Glass-ceramic or glass body according to Claim 1, **characterized in that** the silicate melt is formed by a glass flux.

3. Glass-ceramic or glass body according to Claim 2, **characterized in that** the glass flux has a glass composition (in % by weight) of
| | |
|---|---|
| Li₂O | 0 - 5 |
| Na₂O | 0 - 5 |
| K₂O | < 2 |
| ΣLi₂O + Na₂O + K₂O | 1 - 10 |
| MgO | 0 - 3 |
| CaO | 0 - 4 |
| SrO | 0 - 4 |
| BaO | 0 - 4 |
| ZnO | 0 - 4 |
| B₂O₃ | 15 - 27 |
| Al₂O₃ | 10 - 20 |
| SiO₂ | 43 - 58 |
| TiO₂ | 0 - 3 |
| ZrO₂ | 0 - 4 |
| Sb₂O₃ | 0 - 2 |
| F | 0 - 3. |

4. Glass-ceramic or glass body according to one of Claims 1 to 3, **characterized in that** customary fillers and/or other conventional colour pigments are added to the silicate melt in addition to the special effect pigments.

5. Glass-ceramic or glass body according to one of Claims 1 to 4, **characterized in that** the decoration is formed by means of screen printing.

6. Glass-ceramic or glass body according to one of Claims 1 to 5, **characterized in that** the pigment content of the special effect pigments is in the range from 1 to 30% by weight.

## Revendications

1. Corps en verre ou en vitrocéramique hautement résistant à la chaleur, conçu sous la forme d'une surface de cuisson dans des plaques de cuisson, d'un pare-feu de cheminée, d'une fenêtre de four ou d'un écran protecteur de lampe, décoré avec une peinture à base d'une masse fondue siliceuse, qui est munie de pigments à effets, **caractérisé en ce que** la masse fondue siliceuse de la peinture de décoration contient en une proportion déterminée des pigments à effets spéciaux, qui présentent un effet flip-flop sur le corps en verre ou en vitrocéramique décoré et qui sont formés par des pigments à effets sous la forme de paillettes de dioxyde de silicium (SiO₂) coplanaires synthétiques qui sont revêtues avec des oxydes métalliques.

2. Corps en verre ou en vitrocéramique selon la revendication 1, **caractérisé en ce que** la masse fondue siliceuse est formée par un flux de verre.

3. Corps en verre ou en vitrocéramique selon la revendication 2, **caractérisé en ce que** le flux de verre présente une composition de verre (en % en poids) de
| | |
|---|---|
| Li₂O | 0 à 5 |
| Na₂O | 0 à 5 |
| K₂O | < 2 |
| Σ Li₂O + Na₂O + K₂O | 1 à 10 |
| MgO | 0 à 3 |
| CaO | 0 à 4 |
| SrO | 0 à 4 |
| BaO | 0 à 4 |
| ZnO | 0 à 4 |
| B₂O₃ | 15 à 27 |
| Al₂O₃ | 10 à 20 |
| SiO₂ | 43 à 58 |
| TiO₂ | 0 à 3 |
| ZrO₂ | 0 à 4 |
| Sb₂O₃ | 0 à 2 |
| F | 0 à 3. |

4. Corps en verre ou en vitrocéramique selon l'une quelconque des revendications 1 à 3, **caractérisé en ce que** des charges usuelles et/ou d'autres pigments colorés classiques sont ajoutés à la masse fondue siliceuse en plus des pigments à effets spéciaux.

5. Corps en verre ou en vitrocéramique selon l'une quelconque des revendications 1 à 4, **caractérisé en ce que** la décoration est formée par sérigraphie.

6. Corps en verre ou en vitrocéramique selon l'une quelconque des revendications 1 à 5, **caractérisé en ce que** la proportion des pigments à effets spéciaux est dans la plage allant de 1 à 30 % en poids.
